# EUROPEAN PATENT APPLICATION

(11) **EP 4 202 847 A1**
(43) Date of publication of application: **28.06.2023**
(21) Application number: 21216656.5
(22) Date of filing: 21.12.2021
(51) Int. Cl.: G06T 19/00

(54) **VISUALISATION SYSTEM**

(71) Applicant: The West Retail Group Limited, Barton-upon-Humber North Lincolnshire DN18 5RL (GB)
(72) Inventor: Healey, Malcolm Stanley, Barton On Humber DN18 5RX (GB); Laville, Conor, Barton On Humber DN18 5RX (GB); Fisher, Katherine, Barton On Humber DN18 5RX (GB)
(74) Representative: Haseltine Lake Kempner LLP

(57) **Abstract**

Embodiments provide object visualisation systems. An object visualisation system comprises a tracking system, an image capture unit and a visualisation unit. The tracking system determines an origin point location, and identifies the relative positions of object substitutes among a plurality of object substitutes comprising tracking identifiers relative to the origin point location using the tracking identifiers. The tracking system also communicates the relative position information for the plurality of object substitutes to the visualisation unit. The image capture unit captures an image of at least one object substitute from among the plurality of object substitutes, and communicates the captured image to the visualisation unit. The visualisation unit tracks the origin point location and generates an augmented image using the origin point location, the relative position information for the plurality of object substitutes and the captured image of at least one object substitute.

## Description

The present invention relates to object visualisation systems, in particular object visualisation systems for generation of augmented images. The present invention relates to associated computer systems, methods and software.

### Background

The process of designing the interior layout and configuration of a space, such as a room of a building, includes making selections of several different types of component or element, often from a great number of options, along with deciding how to arrange those components relative to one another.

In order to enable a designer or intended user of a space to more easily understand potential layout and configuration options, it may be desirable to display a design to a user, such as a designer or customer, before the eventual physical elements are manufactured and assembled. In this context, the term "layout" is used to refer to the physical arrangement of components, while the term "configuration" is used to refer to the selection of optional properties of a component. Taking the example of a cupboard, layout options may determine where the cupboard is to be positioned, while configuration options may determine what colour the cupboard should be, what type of handle to use, what material to form the cupboard from, and so on.

In some scenarios, it may be possible to view individual physical elements or arrangements of physical elements in a showroom or similar; while this may allow a designer or user to experience individual physical elements in isolation, the physical element inspection may not serve to allow users to understand potential layout and configuration options for the space for which a layout and configuration is to be prepared (such as a room of a building). Accordingly, it may be desirable to employ 3D computer graphics technologies to improve the user experience when viewing a design which is under development or complete. 3D models, or 3D computer graphics models, in this sense are mathematical representations of 3D objects (geometric data) for use by a computer for the purposes of performing calculations and rendering. Rendering of 3D models may generate 2D images for display (such as on a computer monitor).

While viewing a computer-generated virtual representation of a layout and/or configuration for the interior of a space may aid the understanding of a designer and/or user, some advantages provided by inspection of physical objects may not be provided by a virtual representation. Examples of advantages that may be lost include an appreciation of the physical scale of objects, the potential variations in the volume of space occupied by an object (taking the example of a cupboard, the volume of space required when a door of the cupboard is opened), and so on.

It is desirable to provide an object visualisation system combining one or more of the benefits obtainable through viewings of physical elements with one or more of the benefits obtainable through viewing virtual representations of layouts and/or configurations.

### Summary

An object visualisation system in accordance with an embodiment comprises: a tracking system; an image capture unit; and a visualisation unit. The tracking system is configured to determine an origin point location and identify the relative positions of object substitutes among a plurality of object substitutes comprising tracking identifiers relative to the origin point location using the tracking identifiers. The tracking system is also configured to communicate the relative position information for the plurality of object substitutes to the visualisation unit. The image capture unit is configured to capture an image of at least one object substitute from among the plurality of object substitutes, and to communicate the captured image to the visualisation unit. The visualisation unit is configured to track the origin point location and generate an augmented image using the origin point location, the relative position information for the plurality of object substitutes and the captured image of at least one object substitute.

In some embodiments, the visualisation unit may cause a display unit to display the augmented image. The display unit may form part of an apparatus further comprising the visualisation unit. Alternatively, the display unit may be separate to the visualisation unit and the visualisation unit may cause the augmented image to be transmitted to the display unit.

In some embodiments, the tracking identifiers may comprise machine readable optical labels and wherein the tracking system comprises a machine readable optical label reader. The machine readable optical labels may be 2D barcodes, and the tracking system may comprise a 2D barcode reader.

In some embodiments, the visualisation unit may, when generating the augmented image, overlay a computer generated image onto the captured image, the computer generated image occupying a portion of the augmented image that is substantially equivalent to the portion of the captured image occupied by at least one object substitute.

In some embodiments, the visualisation unit may generate, using the relative position information for the plurality of object substitutes, a combined virtual object comprising information on the positions and dimensions of the plurality of object substitutes, and may use the combined virtual object when generating the augmented image. Further, if subsequent to the generation of an augmented image, an alteration in the relative position of one or more of the object substitutes is detected by the tracking system, the visualisation unit may update the combined virtual object and regenerate the augmented image using the updated combined virtual object.

In some embodiments the object substitutes may represent kitchen items, and the augmented image may be an image of a kitchen configuration.

### Brief Description Of Figures

Reference will now be made, by way of example only, to the accompanying drawings, in which:
Figure 1 is a flowchart of a method that may be performed by systems in accordance with embodiments;
Figure 2A is a schematic diagram of an object visualisation system in accordance with embodiments;
Figure 2B is a schematic diagram of a further object visualisation system in accordance with embodiments;
Figure 3A is an example of a captured image;
Figure 3B is an example of an augmented image; and
Figure 4 is an image showing an example of a system, in accordance with embodiments, that is in use.

### Detailed Description

For the purpose of explanation, details are set forth in the following description in order to provide a thorough understanding of the embodiments disclosed. It will be apparent, however, to those skilled in the art that the embodiments may be implemented without these specific details or with an equivalent arrangement.

Embodiments of the invention provide systems for providing augmented reality images using object substitutes. The provided augmented reality images may be used, potentially in conjunction with the object substitutes themselves, to assist designers and/or users in understanding potential layout and configuration options.

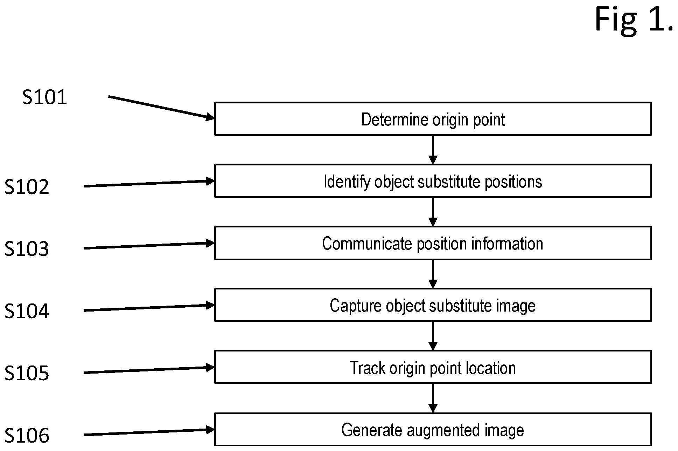

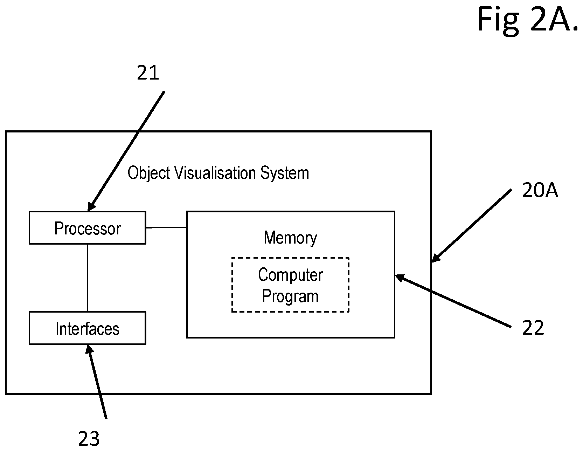

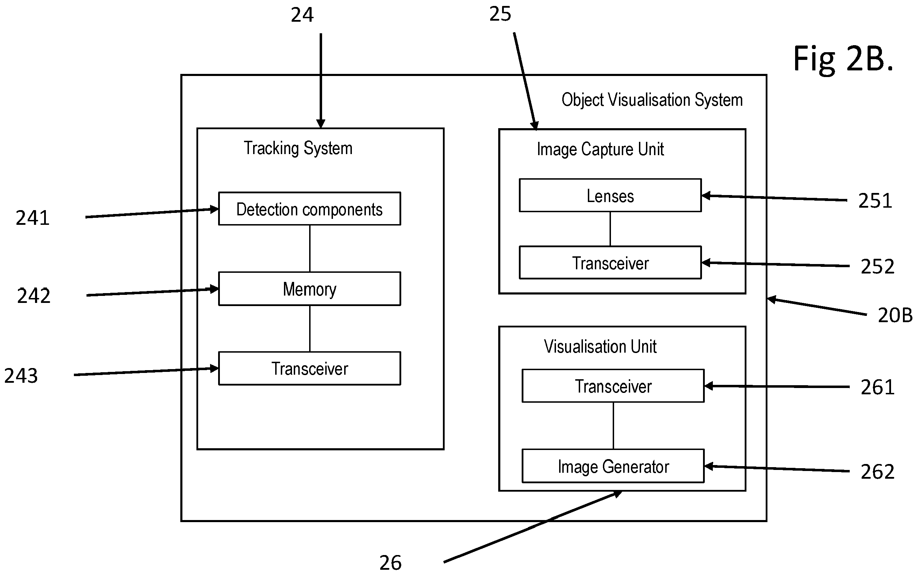

**Figure 1** is a flowchart of a method that may be performed by systems in accordance with embodiments. The method may be performed by any suitable system. Examples of suitable systems for performing the method shown in Figure 1 are the object visualisation systems 20A and 20B shown schematically in **Figure 2A** and **Figure 2B** respectively; object visualisation systems 20A and 20B may collectively be referred to using reference sign 20. The object visualisation system 20A as shown in Figure 2A may execute steps of the method in accordance with a computer program stored in a memory 22, executed by a processor 21 in conjunction with one or more interfaces 23, as discussed in greater detail below. The object visualisation system 20B may execute steps of the method using a tracking system 24, an image capture unit 25 and a visualisation unit 26. In some embodiments, the functions of the tracking system, image capture unit and visualisation unit may be executed accordance with a computer program stored in a memory 22, executed by a processor 21 in conjunction with one or more interfaces 23 (as shown in Figure 2A). The object visualisation systems 20A and 20B may also be configured to execute the steps of other embodiments, as discussed in detail below. Further, unless explicitly stated otherwise, the systems need not perform the steps of the method in the order discussed herein. Object visualisation systems in accordance with embodiments may further comprise one or more tracking identifiers and/or one or more object substitutes; alternatively object visualisation systems may be configured to operate with any suitable tracking identifiers and/or object substitutes.

As shown in Figure 2B, a system implementing the method of Figure 1 may comprise a tracking system, an image capture unit and a visualisation unit; these components may be located in separate devices from one another (and may each comprise multiple devices), or alternatively some of the components may be collocated within a single device. In step S101 of Figure 1, a tracking system is used to determine an origin point location. The origin point is a spatial coordinate within a volume that is monitored by the tracking system, which essentially serves as a fixed reference point for subsequent measurements performed; as such, the origin point should remain static with reference to the volume that is monitored while the system is in operation.

Typically, the tracking system is configured to monitor a particular volume of space (wherein the volume of space typically contains at least one object substitute, and may contain a plurality of object substitutes). Where the tracking system is configured to monitor a volume of space, the origin point may be based on a feature point within that space. Any suitable feature that can be identified by the tracking system may be utilised as a feature point; by way of example, where the volume of space is all or part of the interior volume of a building, the feature point may be a corner of the interior volume or a marker (such as a sticker, painted mark, and so on) located on an interior surface (for example, a wall) of the building. More generally, the feature point may be all or part of a door, window, control panel, or other part of a building. An existing feature of a building (such as a door in the example above) may be used as the feature point, or a feature point may be deliberately created for use by the system (such as the sticker discussed above). Further, the feature point may be selected for compatibility with the tracking system; by way of example, where the tracking system uses one or more radio frequency identification (RFID) readers or other electromagnetic radiation based readers (such as those operating using Bluetooth (TM) technologies, as defined by the Bluetooth Special Interest Group standards available at https://www.bluetooth.com/specifications/specs/ as of 15 December 2021), the feature point may be defined with reference to one or more RFID tags or other electromagnetic radiation emitters. By way of example, a triangulation procedure (such as RFID triangulation or Bluetooth (TM) triangulation) may be used to define a feature point. Similarly, where the tracking system uses machine readable optical labels such as 2D barcodes, the feature point may be defined with reference to one or more machine readable optical labels. Where the tracking system has the capability to track a plurality of different identifiers, such as 2D barcodes and RFID tags, the feature point may be defined with reference to one or a combination of the different types of identifiers.

As shown in step S102 of Figure 1, the object tracking system is further configured to identify the relative positions of object substitutes among a plurality of object substitutes comprising tracking identifiers relative to the origin point location using the tracking identifiers. As mentioned above, any suitable identifiers (or combination of different identifiers) that can be tracked by the tracking system may be used as tracking identifiers; the type or types of identifiers to be used may be determined based on the capabilities of the tracking system. The purpose of the tracking identifiers is to allow the object substitutes to be identified, differentiated from one another by the tracking system (where necessary; if two or more object substitutes represent the same object, the same tracking identifiers may be used for these object substitutes as it may not be necessary to differentiate between the object substitutes) and located. Examples of the tracking identifiers include machine readable optical labels such as 2D barcodes, alphanumeric identifiers, other symbols, colour codes, patterns, and so on. Machine readable optical labels may be used in conjunction with tracking systems including machine readable optical label readers, such as 2D barcode readers, cameras linked to text or patten recognition unit, and so on. Further non-optical tracking identifiers such as RFID tags or Bluetooth (TM) tags (from which a location may be determined using triangulation, as will be familiar to those skilled in the art) may additionally or alternatively be used. In some embodiments passive tracking identifiers, which do not require access to a power source or regular maintenance may be used. Examples of passive tracking identifiers include 2D barcodes and alphanumeric identifiers. Use of passive tracking identifiers may increase both the operational lifetime and versatility of the system, by avoiding the need to maintain a potentially large number of tracking identifiers (for example, to replace or recharge batteries). The determination of the origin point and identification of the relative positions of the object substitutes may be performed, for example, by the processor 21 of object visualisation system 20A running a program stored on the memory 23 and utilising the interfaces 22 (which may include one or more detectors), or may be performed by the detection components 241 and memory 242 of object visualisation system 20B.

The tracking identifiers may be located on or in the object substitutes so as to be observable from above the object substitutes when the object substitutes are in use. The positioning of the tracking identifiers with respect to the object substitutes which they are being used to track is dependent at least in part on the location and type of the detectors used by the tracking system to identify the relative position of the object substitutes; where visual detection techniques are used, the tracking identifiers may be positioned so as to be directly observable by the detectors, for example, if the detectors are located above the object substitutes in use (mounted on or suspended from a ceiling, for example), the tracking identifiers may be located on the top surfaces of the object substitutes. Alternatively, if it is not necessary for the observability of the tracking identifiers for the tracking identifiers to be positioned on the surface of the object substitutes, the tracking identifiers may be positioned elsewhere (such as inside the object substitutes when RFID is used, or when the object substitutes are transparent or translucent to optical wavelengths). The tracking system may determine an origin point location using the same detection components (for example, using cameras, RFID readers, and so on) as are used to identify the relative positions of object substitutes, or using different detection components.

The purpose of the object substitutes is to essentially serve as placeholders in the physical volume; when the augmented image is generated, image portions occupied by the object substitute may be overlaid by computer generated images. The object substitutes also serve to allow users and/or designers to obtain realistic experience of planned layouts and configurations, for example, the spacing between components. By way of example, where the object visualisation system is used in the design of kitchens the object substitutes may be used to represent items that may be found in a kitchen (such as cupboards, domestic appliances, worksurfaces, and so on). Images of these kitchen items may be overlaid over the image portions occupied by the object substitutes in the generated augmented image. As an alternative example, where the object visualisation system is used in the design of office interiors, the object substitutes may be used to represent items that may be found in an office (such as desks, storage units, partitions, and so on). Images of these office items may be overlaid over the image portions occupied by the object substitutes in the generated augmented image. The generation of the augmented image is discussed in greater detail below.

As the object substitutes are intended, in the generated augmented image, to be overlaid with computer generated images, the appearance of the object substitutes is not important. Of more importance are the physical properties of the object substitutes. Ideally, the physical dimensions of the object substitutes may be similar to those of the objects they are intended to represent. By way of example, if an object substitute is intended to represent a cuboid cupboard having dimensions of 800mm high, 400mm wide and 300mm deep, the dimensions of the object substitute may be substantially the same as those of the represented cuboid cupboard, that is substantially 800mm high, 400mm wide and 300mm deep. Further, in order to allow users and designers to experiment with different object layouts and configurations, the object substitutes may be configured to be easily moved within the physical volume; in particular, the object substitutes may be formed from lightweight materials such as polystyrene foam, plastic or wood and may be equipped with wheels, castors or similar to allow easy movement. In some embodiments, it may be desirable to be able move a plurality of object substitutes collectively; by way of example, if the object substitutes represent cupboards collectively forming a run of cupboards, it may be desirable to experiment with different configurations and/or layouts while moving the run of cupboards collectively. To support collective movement, object substitutes used in some embodiments may be equipped with temporary fixing means such as hook and eyelet or zip fasteners.

When the tracking system has determined the origin point (as shown in step S101) and identified the object substitute positions relative to this origin point (as shown in step S102), the tracking system then communicates the relative position information for the plurality of object substitutes to the visualisation unit as shown in step S103. Where parts of the tracking system and visualisation unit form part of the same device (that is, are collocated), this communication may be internal to the device, in this situation typically the detectors of the tracking system may be positioned so as to be able to monitor a volume, and may send origin point and relative position information to a central unit (which may be collocated with all or part of the visualisation unit). Where the tracking system and visualisation unit are not collocated, the communication may utilise a wired network connection, wireless network connection, or any other suitable communication means. The communication of the relative position information may be performed, for example, by the processor 21 of object visualisation system 20A running a program stored on the memory 23 and utilising the interfaces 22 (which may include one or more transceivers), or may be performed by the transceiver 243 of object visualisation system 20B.

An image capture unit is used to capture at least one image of at least a part of at least one object substitute among the plurality of object substitutes, as shown in step S104 of Figure 1. The image capture unit may comprise one or more lenses along with associated image capture components (such as charge couple devices, processors, memory, and so on); the lenses may be collocated or may be distributed around the volume of space. In some embodiments, the image capture unit and visualisation unit may be collocated in, for example, a tablet computer or virtual reality headset; the tablet computer or virtual reality headset may further comprise a display unit configured to display a generated augmented image. In alternative embodiments the image capture unit may be separate from the visualisation unit and/or display unit. Although the image capture unit may be configured to capture a single image (comprising at least a part of at least one object substitute), typically the image capture unit may be configured to capture a series of images, that is, a video.

The image capture unit is further configured to communicate the captured image or series of images to the visualisation unit. In some embodiments, the image capture unit may also provide location and orientation information to the visualisation unit; the location information may be absolute location information (obtained, for example, using Global Navigational Satellite System, GNSS, readings) or may be location information relative to the origin point (wherein the image capture unit may be provided with information on the origin point location by the tracking system). The location information may indicate to the visualisation unit the location of the image capture unit when an image is captured. The orientation information may be used to identify the orientation of the image capture unit when an image is captured, that is, the direction in which the image capture lenses are pointing; this information may be obtained using internal sensors of the image capture unit. Where a single image is captured, position and orientation information for that image may be provided. Where a series of images (a video) is captured, position and orientation may be provided for the duration of the video at a suitable frequency.

Examples of suitable frequencies include every 0.1 seconds, every 6 frames of video, and so on. Where the image capture unit and visualisation unit form part of the same device (that is, are collocated), the communication of images and associated location/orientation information may be internal to the device. Where the image capture unit and visualisation unit are not collocated, the communication may utilise a wired network connection, wireless network connection, or any other suitable communication means. The capture of at least one image of at least a part of at least one object substitute may be performed, for example, by the processor 21 of object visualisation system 20A running a program stored on the memory 23 and utilising the interfaces 22 (which may include one or more lenses and/or other image capture means), or may be performed by the lenses 251 of object visualisation system 20B. Further, the captured image(s) may be sent to a visualisation unit using the processor 21 of object visualisation system 20A running a program stored on the memory 23 and utilising the interfaces 22, or by transceiver 252 of object visualisation system 20B

The visualisation unit is configured to receive the relative position information for the plurality of object substitutes from the tracking system and also to receive the image or images from the image capture unit (the images may be accompanied by position and/or orientation information). The reception of the relative position information and captured image(s) may be performed, for example, by the processor 21 of object visualisation system 20A running a program stored on the memory 23 and utilising the interfaces 22 (which may include one or more transceivers), or may be performed by the transceiver 261 of object visualisation system 20B. The visualisation unit is further configured to track the origin point location (potentially using information provided by a tracking system), as shown in step S105 of Figure 1. Using the origin point location in conjunction with the relative position information for the plurality of object substitutes and the captured image(s), the visualisation unit is then configured to generate an augmented image as shown in step S106 of Figure 1. The tracking of the origin point and generation of the augmented image(s) may be performed, for example, by the processor 21 of object visualisation system 20A running a program stored on the memory 23 and utilising the interfaces 22 (which may include one or more transceivers), or may be performed by the image generator 262 of object visualisation system 20B.

When generating the augmented image, the visualisation unit may be configured to overlay a computer-generated image onto the captured image (or onto one or more of the series of captured images where a series of images has been captured). The computer-generated image may occupy a portion of the augmented image that is substantially equivalent to the portion of the captured image occupied by at least one object substitute, that is, the computer-generated image may overwrite a portion of the augmented image that, in the capture image showed the object substitute. Where position and/or orientation information for the image capture unit corresponding to the capture of the captured image is available, this information may be useful in identifying which object substitutes (or parts of the same) are shown in a captured image. Where position and/or orientation information for the information for the image capture unit corresponding to the capture of the captured image is not available, the visualisation unit may identify the object substitutes (or parts of the same) in another way, for example, using tracking identifiers visible in the captured image.

Returning to the example discussed above wherein the object substitutes are used represent items that may be found in a kitchen (such as cupboards, domestic appliances, worksurfaces, and so on), images of these items may be overlaid over the image portions occupied by the object substitutes in the generated augmented image. If a user or designer desires to experiment with different configuration options, the augmented image may be updated as necessary to display the alterations resulting from the different configuration options. Again, returning to the example wherein the object substitutes are used represent items that may be found in a kitchen, the colour of the items may be altered, the design of handles on cupboard doors may be changed, the material used for worksurfaces may be altered, and so on; these different configuration options may be shown by updating augmented images.

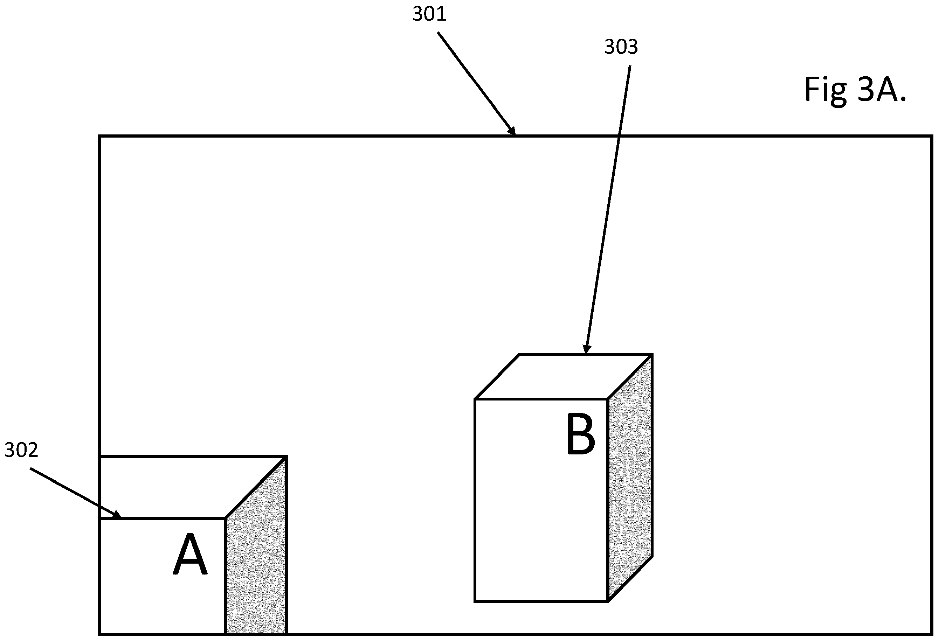

An example of how the augmented images may be generated is discussed below. **Figure 3A** shows an example of a captured image 301. In the captured image, a portion of a first object substitute 302 is shown, and all of a second object substitute 303 is shown. The tracking identifiers for the two images are also visible; in this example the tracking identifiers are single character alphanumeric identifiers. The first object substitute 302 has a tracking identifier "A", and the second object substitute 303 has a tracking identifier "B". Both of the object substitutes in this example have simple cuboid geometries (alternative geometries may also be used in other examples).

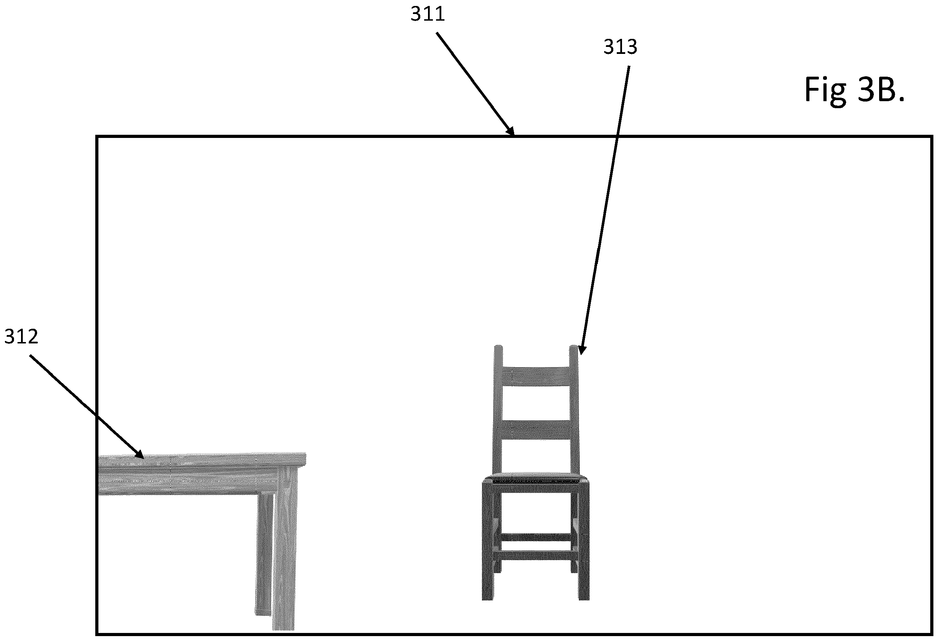

**Figure 3B** shows an example of an augmented image 311; the augmented image shown in Figure 3B has been generated using captured image 301. As can be seen in Figure 3B, in the augmented image computer generated images have been overlaid substantially onto the portions of the captured image showing the object substitutes. More specifically, a computer generated image 312 showing a table has been overlaid over the first object substitute 302, and a computer generated image 313 showing a chair has been overlaid over the second object substitute 303. In general, when the augmented images are generated, object substitutes (or portions of the same) that were visible in a captured image are not visible in augmented images generated from the captured image, as computer-generated images occupy portions of the augmented image that are substantially equivalent to the portions of the captured image occupied by object substitutes.

When generating the augmented image the visualisation unit may generate, using the relative position information for the plurality of object substitutes, a combined virtual object comprising information on the positions and dimensions of the plurality of object substitutes. The generated combined virtual object may then be used when generating the augmented image. By generating a combined virtual object in this way, the visualisation unit may save processing resources; the visualisation unit is able to track the position and dimensions of a single object (the combined virtual object), rather than tracking the positions and dimensions of each of the plurality of object substitutes separately. A consequence of the use of the combined virtual object is that, if the position of one (or more) of the object substitutes is altered relative to the origin point subsequent to the generation of an augmented image, the combined virtual object may no longer accurately represent the positions of the plurality of object substitutes. Accordingly, the combined virtual object may be updated such that it accurately reflects the positions of the object substitutes, and the updated combined virtual object may be used to regenerate a new augmented image (which may correspond to the next augmented image in a series where a series of images has been captured as discussed above, or which may be a revised version of the original augmented image where only a single image has been captured).

When an augmented image has been generated, the visualisation unit may be further configured to cause a display unit to display the augmented image (or series of augmented images where appropriate). In some embodiments the display unit may be a screen, for example: a screen of a tablet computer; a table or wall mounted screen; and so on. In other embodiments, the display unit may comprise a virtual reality (VR) headset. Embodiments in which the display unit may be moved around the volume of space containing the object substitutes may provide a particularly immersive experience, allowing a potential layout/configuration to be viewed from a variety of positions, and also allowing users or designers to pass through gaps between object substitutes. Where the display unit may be moved around the volume of space containing the object substitutes, the image capture unit may be collocated with the display unit; this may simplify the process for generating augmented images (particularly where the image capture unit also provides position and orientation information as discussed above). In some embodiments the display unit forms part of an apparatus further comprising the visualisation unit; an example is where the display unit and visualisation unit both form part of a tablet computer. Alternatively, the display unit may be separate to the visualisation unit and the visualisation unit may be configured to cause the augmented image to be transmitted to the display unit; this may be the case where the display unit is a VR headset or a wall mounted screen and the visualisation unit forms part of a separate computer. In some embodiments multiple display units may be used to display the augmented image, for example, a tablet computer that a user or designer may carry around the volume of space containing the object substitutes may be used in conjunction with a wall mounted screen displaying a larger version of the augmented image than the tablet computer display unit.

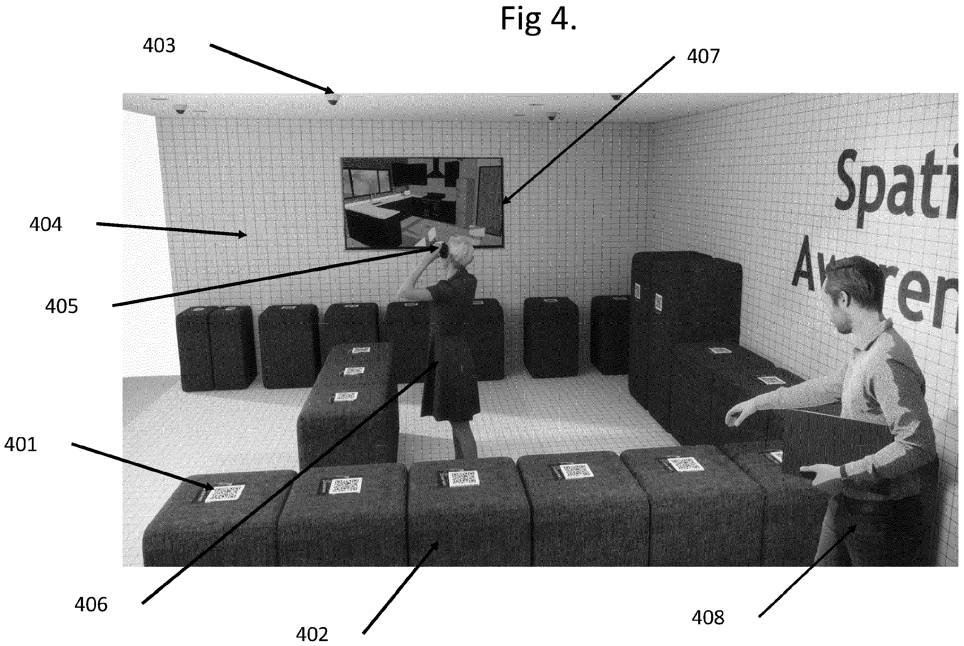

**Figure 4** shows an example of a system in accordance with embodiments that is being used. The example system shown in Figure 4 is being used to view potential kitchen layouts. In the example shown in Figure 4, the tracking identifiers 401 comprise 2D barcodes and are located on the object substitutes 402 so as to be visible to at least one of a plurality of cameras 403 linked to 2D barcode reading software that form part of the tracking system. As shown in Figure 4, several of the cameras in the example system are mounted on the ceiling of a portion of a room, the portion of the room being the volume 404 that is monitored by the tracking system. In the example shown in Figure 4, the image capture unit is mounted on a VR headset 405, and a display unit also forms part of the same VR headset. In Figure 4, the VR headset is shown being worn by a user 406. A wall mounted screen 407 is used as a further display unit, allowing a designer 408 to observe the augmented image along with the user (again, the user is wearing the VR headset). In the example system shown in Figure 4, the image capture unit (which also provides position and orientation information) and a display unit both form part of the VR headset. The visualisation unit forms part of or is connected to a laptop computer 409; the designer is able to modify the configuration of the kitchen (altering the colour of computer generated kitchen items, the simulated materials used, switching between different material finishes, and so on), and the augmented image shown on the wall mounted screen (a further display unit) and on the display of the VR headset may be updated accordingly.

Embodiments provide object visualisation systems that may combine some or all of the benefits of viewing physical elements with some or all of the benefits from viewing virtual representations of layouts and/or configurations, including appreciation of the physical scale of objects and the potential variations in the volume of space occupied by an object, as well as variations in potential colour and material options (for example). Further embodiments may allow the generation of augmented images while efficiently using processing resources. Embodiments may also provide systems requiring low levels of maintenance and having long operational lifetimes.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure. For the avoidance of doubt, the scope of the disclosure is defined by the claims.

## Claims

1. An object visualisation system comprising:
a tracking system;
an image capture unit; and
a visualisation unit;
wherein the tracking system is configured to:
determine an origin point location;
identify the relative positions of object substitutes among a plurality of object substitutes comprising tracking identifiers relative to the origin point location using the tracking identifiers; and
communicate the relative position information for the plurality of object substitutes to the visualisation unit;
the image capture unit is configured to capture an image of at least one object substitute from among the plurality of object substitutes, and to communicate the captured image to the visualisation unit;
the visualisation unit is configured to track the origin point location and generate an augmented image using the origin point location, the relative position information for the plurality of object substitutes and the captured image of at least one object substitute.

2. The object visualisation system of claim 1, wherein the visualisation unit is further configured cause a display unit to display the augmented image.

3. The object visualisation system of claim 2, wherein the display unit forms part of an apparatus further comprising the visualisation unit, or wherein the display unit is separate to the visualisation unit and the visualisation unit is further configured to cause the augmented image to be transmitted to the display unit.

4. The object visualisation system of any of claims 2 and 3, wherein the display unit comprises a screen, or wherein the display unit comprises a virtual reality headset.

5. The object visualisation system of any preceding claim, wherein the tracking identifiers comprise machine readable optical labels and wherein the tracking system comprises a machine readable optical label reader, optionally wherein the machine readable optical labels are 2-dimensional, 2D, barcodes and wherein tracking system comprises a 2D barcode reader.

6. The object visualisation system of any of claims 1 to 4, wherein the tracking identifiers comprise radio frequency identification, RFID, tags and wherein the tracking system comprises a RFID reader, or wherein the tracking identifiers comprise Bluetooth (TM) tags and the tracking system comprises a Bluetooth (TM) receiver.

7. The object visualisation system of any of claims 5 and 6, wherein the tracking identifiers are located on or in the object substitutes so as to be observable from above the object substitutes when the object substitutes are in use, and wherein the tracking system is configured to detect the tracking identifiers.

8. The object visualisation system of any preceding claim, wherein the origin point location is determined based on a feature point of a space containing the plurality of object substitutes.

9. The object visualisation system of claim 8, wherein:
the space is an interior volume of a building and the feature point is a corner of the interior volume; or
the space is an interior volume of a building and the feature point is a marker located on an interior surface of the building; or
the feature point is a door, window, control panel, or other part of a building.

10. The object visualisation system of any preceding claim, wherein the visualisation unit is configured, when generating the augmented image, to overlay a computer generated image onto the captured image, the computer generated image occupying a portion of the augmented image that is substantially equivalent to the portion of the captured image occupied by at least one object substitute.

11. The object visualisation system of any preceding claim, wherein the visualisation unit is further configured to generate, using the relative position information for the plurality of object substitutes, a combined virtual object comprising information on the positions and dimensions of the plurality of object substitutes, and is further configured to use the combined virtual object when generating the augmented image.

12. The object visualisation system of claim 11 further configured if, subsequent to the generation of an augmented image, an alteration in the relative position of one or more of the object substitutes is detected by the tracking system, to update the combined virtual object and regenerate the augmented image using the updated combined virtual object.

13. The object visualisation system of any preceding claim, wherein the object substitutes represent kitchen items, and wherein the augmented image is an image of a kitchen configuration.

14. The object visualisation system of any preceding claim, wherein the image capture unit is further configured to obtain position information and/or orientation information when capturing the image of at least one object substitute, and wherein the visualisation unit is further configured to utilise the position information and/or orientation information when generating the augmented image.

15. The object visualisation system of any preceding claim, further comprising the plurality of object substitutes.
